Europäisches Patentamt

European Patent Office

Office européen des brevets

(19)

(11) **EP 1 242 525 B1**

(12) **EUROPEAN PATENT SPECIFICATION**

(45) Date of publication and mention
of the grant of the patent:
**29.09.2004  Bulletin 2004/40**

(51) Int Cl.[7]: **C08K 5/10**, C08L 75/02,
C08K 5/101

(21) Application number: **00984079.4**

(22) Date of filing: **08.12.2000**

(86) International application number:
**PCT/US2000/033348**

(87) International publication number:
**WO 2001/042345 (14.06.2001 Gazette 2001/24)**

(54) **BLISTER-RESISTANT MOLDED POLYUREA POLYMER AND METHOD OF MAKING A BLISTER-RESISTANT MOLDED POLYUREA POLYMER**

GUSSBLASENFREIER POLYHARNSTOFF UND VERFAHREN ZU SEINER HERSTELLUNG

POLYUREE MOULEE RESISTANT AU CLOQUAGE ET PROCEDE DE FABRICATION CORRESPONDANT

(84) Designated Contracting States:
**AT BE CH CY DE DK ES FI FR GB GR IE IT LI LU MC NL PT SE TR**

(30) Priority: **10.12.1999  US 170294 P**

(43) Date of publication of application:
**25.09.2002  Bulletin 2002/39**

(73) Proprietor: **DOW GLOBAL TECHNOLOGIES INC.**
**Midland, Michigan 48674 (US)**

(72) Inventors:
• **JAMES, Allan**
**Camlachie, Ontario NON 1EO (CA)**

• **ARNOLD, Kenneth, B.**
**Lake Jackson, TX 77566 (US)**

(74) Representative: **Raynor, John et al**
**W.H. Beck, Greener & Co**
**7 Stone Buildings**
**Lincoln's Inn**
**London WC2A 3SZ (GB)**

(56) References cited:
WO-A-96/22182            US-A- 5 525 681
US-A- 5 713 995

**Description**

This invention relates to polyurea polymers and polyurea-polymer formulations and to methods of making polyurea polymers and polyurea-polymer formulations. More particularly, this invention is directed to polyurea-polymer formulations that include a fatty-acid ester in an amount effective for providing blister resistance to a molded polyurea polymer prepared from a polyurea-polymer formulation.

It is known in the art that isocyanate-based polymers can be useful for preparing moldings such as automobile fascia and body panels. These isocyanate-based polymers include polyurea polymers. For example, U.S. Patent No. 4,218,543 issued to Weber et al. discloses preparing elastomeric moldings by a reaction-injection-molding (RIM) process.

But polyurea polymers can be problematic in some applications. When a polyurea polymer is molded into, for example, a RIM part such as automobile fascia or automobile body panels, and the molded polymer is first exposed to moisture and then exposed to a high temperature such as a temperature greater than 350°F (177°C), surface defects in the molded polymer can be observed. These defects can be particularly problematic when mica is used as a filler in a polyurea-polymer formulation.

In one common application, which is reaction injection molding of body parts for automobiles, a molded polymer can be exposed to temperatures exceeding 350°F (177°C). Moreover, these body parts can further be subjected to even higher temperatures when the parts are assembled onto an automobile and the automobile is subjected to known production conditions, such as an e-coat process. For example, the parts assembled onto an automobile can be subjected to temperatures up to 400°F (204°C) for up to 30 minutes under general production conditions and sometimes for up to 60 minutes under experimental production conditions.

If a molded polymer contains too much water when it is exposed to heat, it can exhibit surface defects commonly known in the art as blistering. Blistering generally occurs when moisture absorbed into the molded polymer interacts with the polymer to produce gas and the gas accumulates to form a gas pocket. In a laboratory, blister resistance is measured by soaking a test panel for two days in water and then exposing the panel to elevated temperatures. The temperature at which the panel fails is identified as the panel's temperature-capable point.

One approach that has been used to overcome this blistering problem includes substituting wollastonite for mica as a filler. Another approach that has been used includes admixing a polyepoxide with a polyisocyanate and a polyamine. For example. U.S. Patent No. 5,525,681 issued to Barron et al. teaches polyurea polymers prepared from formulations including a polyisocyanate, a polyamine, and a polyepoxide. But, in some instances, these types of formulations, such as when mica is used as a filler, can lead to molded polymers that have a brittleness that is less than desirable for production conditions.

Other solutions to address the blistering problem, such as avoiding exposure to high temperatures or moisture, are less than desirable because of properties that can be provided to a molded polymer from such exposure or because of unavoidable process or manufacturing conditions that a molded polymer can be exposed to.

Thus, it would be desirable to prepare alternative polyurea polymers that can remain substantially free of blisters when exposed to moisture and elevated temperatures suitable for traditional production conditions such as postcuring and e-coat conditions.

According to the invention, jojoba oil is used to improve the blister resistance of a molded polyurea-polymer. According to the invention formation suitable for preparing a molded polyurea polymer includes a polyisocyanate, an isocyanate-reactive material, and jojoba oil. The jojoba oil is present in an amount effective for providing blister resistance to a molded polyurea polymer prepared from the formulation such that when the molded polyurea polymer is exposed to moisture and a temperature of at least 350°F (177°C), the molded polyurea polymer is substantially free of blisters.

The formulation may include at least one of a chain extender, a catalyst, a surfactant, and an internal-mold-release agent. The formulation can also include a polyepoxide.

A molded polyurea polymer can be prepared from the polyurea-polymer formulation by admixing a polyisocyanate, an isocyanate-reactive material, and jojoba oil to form a mixture, and molding the mixture by using reaction injection molding.

The polyurea-polymer formulation can also include other components known to be useful with polyurea polymers, particularly fillers, catalysts, surfactants, and polyepoxides.

Jojoba oil is added in an amount effective for providing a molded polyurea polymer prepared from a polyurea-polymer formulation of the invention with blister resistance such that when the molded polyurea-polymer formulation is exposed to moisture and a temperature of at least 350°F (177°C), preferably at least 375°F (190°C), more preferably at least 390°F (199°C), and still more preferably at least 400°F (204°C), the molded formulation is substantially free of blisters. Generally the temperature is no greater than 425°F (218°C), preferably no greater than 415°F (213°C), and more preferably no greater than 405°F (207°C).

A molded polyurea polymer can he exposed to such a temperature for time periods generally used for production conditions such as time periods suitable for postcuring a molded polyurea polymer or time periods suitable for subjecting an automobile having a molded polyurea polymer to, for example, an e-coat process. Typically a molded polyurea polymer can he exposed to such a temperature for at least 20 minutes, preferably at least 25 minutes, and more preferably at least 30 minutes. Generally the exposure is not longer than 60 minutes, preferably no longer than 50 minutes, and more preferably no longer than 45 minutes.

The exposure to moisture generally results in the molded polyurea polymer taking up no more than 2 weight-percent water based on the weight of the molded polyurea polymer, preferably no more than 1.5 weight-percent water, and more preferably no more than 1.0 weight-percent water. Generally the molded polyurea polymer can take up between 1.0 and 1.5 weight-percent water based on the weight of the molded polyurea polymer.

Typically the jojoba oil is added to a polyurea-polymer formulation in an amount of at least 0.5 weight percent, preferably at least 1.5 weight percent. and more preferably at least 2 weight percent. But it should not be added in such a large amount that the formulation becomes prohibitively expensive, becomes substantially difficult to process, or cannot be used for its intended purpose. It is generally added in an amount no greater than 5.0 weight percent, preferably no greater than 4 weight percent, and more preferably no greater than 3 weight percent. The weight percent of jojoba oil is based on the weight of the reaction mixture that contains the isocyanate-reactive material, which is conventionally known as the B-side reactant. The B-side reactant generally reacts with the polyisocyanate, which is conventionally known as the A-side reactant, in the chemistry used to make a polyurea polymer.

The polyurea-polymer formulation of the invention includes a polyisocyanate. A polyisocyanate suitable for use with a formulation of the invention includes any polyisocyanate suitable for preparing a molded polyurea polymer.

A polyisocyanate can be advantageously selected from organic polyisocyanates. modified polyisocyanates, isocyanate-based prepolymers, and mixtures thereof. These can include aliphatic and cycloaliphatic isocyanates, but multifunctional and particularly difunctional aromatic isocyanates are preferred. Preferred are 2,4- and 2,6-toluenediisocyanate (TDI) and the corresponding isomeric mixtures; 4,4'-, 2,4'-, and 2,2'-diphenylmethanediisocyanate (MDI); mixtures of 4',4'-, 2,4'-, and 2,2'-MDI and polyphenyl polymethylene polyisocyanates (PMDI); and mixtures of PMDI and TDI.

Also useful for preparing the polyureas of the invention are aliphatic and cycloaliphatic isocyanate compounds such as 1,6-hexamethylenediisocyanate; 1-isocyanato-3,5,5-trimethyl-1-3-isocyanatomethyl cyclohexane; 2,4- and 2,6-hexanhydrotoluenediisocyanate. The corresponding isomeric mixtures: 4,4'-, 2,2'-, and 2,4'-dicyclohexylmethanediisocyanate as well as the corresponding isomeric mixtures can also be used. Isophorone diisocyanate can also be used with the invention.

Also advantageously used for the polyisocyanate are the so-called modified multifunctional isocyanates, that is, products that are obtained through chemical reactions of the above polyisocyanates. Examples of such polyisocyanates include polyisocyanates containing at least one of esters, ureas, biurets, allophanates, carbodiimides, uretonimines, and urethane groups containing diisocyanates or polyisocyanates.

Polyisocyanates containing at least one of a carbodiimide group and a uretonimine group and having an isocyanate group (NCO) content of from 10 to 40 weight percent based on the total weight of isocyanate prepolymer, more preferably from 20 to 35 weight percent, can also be used. These include, for example, polyisocyanates based on 4,4'-, 2,4'-, or 2,2'-MDI, the corresponding isomeric mixtures, and mixtures thereof; 2,4-, 2,6-TDI, the corresponding isomeric mixtures, and mixtures thereof; and mixtures of MDI and PMDI, mixtures of TDI and PMDI, diphenylmethane diisocyanates, and mixtures thereof.

Suitable and preferred are prepolymers having an NCO content of from 5 to 40 weight percent based on the total weight of isocyanate prepolymer and more preferably from 15 to 30 weight percent. These prepolymers are prepared by reaction of the polyisocyanates with materials including lower molecular weight diols or triols, but also they can be prepared with multivalent active hydrogen compounds such as di- and tri-amines and di- and tri-thiols. Individual examples are aromatic polyisocyanates containing urethane groups, preferably having an NCO content of from 5 to 40 weight percent, more preferably 10 to 35 weight percent, obtained by reaction of polyisocyanates with, for example, lower molecular weight diols, triols, oxyalkylene glycols, dioxyalkylene glycols, or polyoxyalkylene glycols having molecular weights up to 800. These polyols can be employed individually or in mixtures as di- and/or polyoxyalkylene glycols. For example, diethylene glycols, dipropylene glycols, polyoxyethylene glycols, polyoxypropylene glycols, and polyoxypropylene-polyoxyethylene glycols can be used.

Even more preferred for use in the invention are: (i) polyisocyanates having an NCO content of from 8 to 40 weight percent based on the total weight of isocyanate prepolymer and containing carbodiimide groups and/or urethane groups, from 4,4'-MDI or a mixture of 4,4'- and 2,4'-MDI; (ii) prepolymers containing NCO groups, having an NCO content of from 10 to 35 weight percent, based on the weight of the prepolymer, prepared by the reaction of polyoxyalkylene polyols, having a functionality of preferably from 2 to 4 and a molecular weight of from 800 to 15,000 with 4,4'-diphenylmethane diisocyanate or with a mixture of 4,4'- and 2,4'-MDI and mixtures of (i) and (ii); and (iii) 2,4- and 2,6-TDI and the corresponding isomeric mixtures.

A polyurea-polymer formulation of the invention also includes an isocyanate-reactive material such as a polyamine. Any polyamine suitable for preparing a molded polyurea polymer can be used in a formulation of the invention.

A polyamine includes any amine compound having at least two isocyanate-reactive hydrogens per molecule. Preferably all isocyanate-reactive hydrogens of the polyamine are amine-group hydrogens. Examples of such polyamines include alkylene polyamines represented by the formula:

$$NH_2C_2H_4(NHC_2H_4)_nX$$

where X is -OH or -NH$_2$ and where n has the value of 0 to 5. When X is -NH$_2$, such alkylene polyamines include ethylene diamine, diethylene triamine, triethylene tetramine, tetraethylene pentamine, and pentaethylene hexamine.

Aromatic amines can be used with the invention as well. Examples of aromatic polyamines include 2,4 and 2,6-toluenediamine, n-aminoethytpiperazine, m-phenylenediamine. Particularly useful with the invention are diethyltoluenediamine and di-tert-butyl-toluenediamine.

A particularly useful group of amines are amines derived from polyoxypropylene diols and triols. Preferably these diamines have the formula:

$$H_2NCH(CH_3)CH_2[OCH_2CH(CH_3)]_xNH_2$$

wherein *x* is an integer of from 2 to 40, and the triamines have the formula:

$$CH_2[OCH_2CH(CH_3)_xNH_2$$
$$|$$
$$CH(CH_2)_3[OCH_2CH(CH_3)]_yNH_2$$
$$|$$
$$CH_2[OCH_2CH(CH_3)]_zNH_2$$

wherein *x*, *y*, and *z* represent integers in the range of from 1 to 15, and the sum of *x, y,* and *z* is from 3 to 45. The most preferred polyoxypropylene diamines have an average molecular weight of from 230 to 2000. The most preferred polyoxypropylene triamines have an average molecular weight of from 190 to 5000. Also useful are diamines having the formula:

$$H_2NCH(CH_3)CH_2[OCH(CH_3)CH_2]_x[OCH_2CH_2]_y[OCH_2CH(CH_3)_zNH_2$$

wherein *x + z* equals 2 to 10 and *y* is an integer from 1 to 50.

Care should be exercised in choosing the polyisocyanate and polyamine for use in a formulation of the invention. Primary amines and aromatic polyisocyanates are particularly mutually reactive. Forming polymers from such components can be very difficult because the reaction can be rapid and very exothermic, thereby preventing the formation of a homogenous polymer. Therefore, one should choose polyisocyanate and polyamine components that have a mutual reactivity suitable for preparing the desired polyurea polymer. One skilled in the art having read this specification would understand how to choose desirable polyisocyanates and polyamines.

Polyurea-polymer formulations of the invention can also include other isocyanate-reactive materials besides a polyamine or in combination with a polyamine. For example, a polyurea-polymer formulation of the invention can also include polyether or polyester polyols. These types of isocyanate-reactive materials are generally used to prepare polyurethane polymers. Active hydrogen-containing compounds most commonly used in polyurethane production are those compounds having at least two hydroxyl groups. Those compounds are referred to herein as polyols. The resultant polymers can also have improved physical properties compared to otherwise similar conventional polymers.

The terms "polyurea polymer" and "polyurea-polymer formulation" are intended to include both polyurea and polyurethane polymers as well as a combination of polyurea and polyurethane polymers and their corresponding formulations.

Representative polyols suitable for use in the invention are generally known and are described in such publications as *High Polymers,* Vol. XVI, "Polyurethanes, Chemistry and Technology" by Saunders and Frisch, Interscience Publishers, New York, Vol. I, pp. 32-42, 444-54 (1962) and Vol. II, pp. 5-6, 198-199 (1964); *Organic Polymer Chemistry* by K.J. Saunders, Chapman and Hall, London, pp. 323-325 (1973); and *Developments in Polyurethanes*, Vol. I, J.M.

**EP 1 242 525 B1**

Burst, ed., Applied Science Publishers, pp. 1-76 (1978).

But any active hydrogen-containing compound can be used with this invention. Examples of such materials include those selected from the following classes of composition, alone or in mixture: (a) alkylene oxide adducts of polyhydroxyalkanes; (b) alkylene oxide adducts of nonreducing sugars and sugar derivatives; (c) alkylene oxide adducts of phosphorus and polyphosphorus acids; and (d) alkylene oxide adducts of polyphenols. Polyols of these types are referred to herein as "base polyols." Examples of alkylene oxide adducts of polyhydroxyalkanes useful according to the invention are adducts of ethylene glycol, propylene glycol, 1,3-dihydroxypropane, 1,4-dihydroxybutane, and 1,6-dihydroxhexane, glycerol, 1,2,4-trihydroxybutane, 1,2,6-trihydroxyhexane, 1,1,1-trimethylolethane, 1,1,1-trimethylolpropane, pentaerythritol, polycaprolactone, xylitol, arabitol, sorbitol, and mannitol. Preferably an alkylene oxide adduct of polyhydroxyalkanes is an ethylene oxide adduct of trihydroxyalkanes. Other useful adducts include ethylene diamine, glycerin, ammonia, 1,2,3,4-tetrahydroxy butane, fructose, and sucrose.

Also preferred are poly(oxypropylene) glycols, triols, tetrols, and hexols and any of these that are capped with ethylene oxide. These polyols also include poly(oxyproyleneoxyethylene) polyols. The oxyethylene content should preferably comprise less than 80 weight percent of the total based on the total weight of the polyol and more preferably less than 40 weight percent. The ethylene oxide, when used, can be incorporated in any way along the polymer chain, for example, as internal blocks, terminal blocks, or randomly distributed blocks, or any combination thereof.

Polyisocyanate polyaddition active hydrogen-containing compounds (PIPA) can be used with the invention. PIPA compounds are typically the reaction products of TDI and triethanolamine. A method for preparing PIPA compounds can be found in, for example, U.S. Pat. No. 4,374,209 issued to Rowlands.

Another class of polyols that can be used with the invention is "a copolymer polyol," which includes base polyols containing stably dispersed polymers such as acrylonitrile-styrene copolymers. Production of these copolymer polyols can be from reaction mixtures comprising a variety of other materials, including, for example, catalyst such as azobisisobutyronitrile; copolymer-polyol stabilizers; and chain-transfer agents such as isopropanol.

in addition to the base polyols described above, other active hydrogen-containing materials are useful with the invention. Low molecular-weight polyfunctional compounds such as glycols, glycerols, di- and tri-amino compounds, and polyfunctional amino-alcohols can be included in the formulations of the invention and are particularly useful. For example, ethylene glycol and/or diethyltoluenediamine can be used as chain extenders.

When additional isocyanate-reactive materials such as a polyol is included in a polyurea-polymer formulation of the invention, it is included in the calculation of ratio of isocyanate groups to isocyanate-reactive groups.

A polyurea-polymer formulation of the invention can also include known additives and other known formulation components to prepare molded polyurea polymers with desired properties. Generally any additive known to those skilled in the art to be useful in preparing polyurea-polymer formulations can be included in a formulation of the invention so long as the additive is compatible with other components in the formulation.

For example, when a foamed polymer is desired, the polyurea polymers can be prepared from a formulation including one or more blowing agents such as water, carbon dioxide, and air.

A polyurea-polymer formulation of the invention can also include a filler. Any filler generally known to one of skill in the art as useful for polyurea polymers can be used. Suitable fillers include mica, clays, glass fibers, glass beads, glass microspheres, and wollastonite.

A polyurea-polymer formulation can also include a reinforcing substrate. Any reinforcing substrate generally known to one of skill in the art as useful for polyurea polymers can be used. For example the polymers of the invention can be prepared with reinforcing mats.

Other known additives can be included in a polyurea-polymer formulation of the invention. Examples of such additives include mold-release agents (e.g., zinc stearate), surfactants (e.g., silicone surfactant), ultraviolet-light stabilizers, molecular-weight extenders, pigments, catalysts (e.g., dimethyl tin dilaurate), and fire retardants. These materials are all well known in the art.

A polyurea-polymer formulation of the invention preferably includes a polyexpoxide. A polyexpoxide suitable for use with the invention includes diglycidyl ethers of compounds containing an average of more than two, preferably not greater than 2 aromatic, cycloaliphatic, or aliphatic hydroxyl groups per molecule. Suitable polyepoxides also include a diglycidyl ether of dihydric bisphenol. Other examples are described in U.S. Patent No. 5,525,681. A polyurea-polymer formulation can include up to 20 weight-percent polyepoxide based on the total weight of the formulation.

The isocyanate index of a polyurea polymer has been known to affect blister resistance of a molded polyurea polymer. The isocyanate index is the molar ratio of isocyanate groups to isocyanate-reactive groups. Conventionally the isocyanate index of formulations for RIM polyurea polymers is in a range of from 0.80 to 1.20, preferably from 0.90 to 1.10, and more preferably from 0.95 to 1.05. Notably, while increasing the isocyanate index can improve blister resistance, the molded polymer generally becomes more brittle, which is undesirable for a variety of applications. Brittleness is a significant problem at an isocyanate index of 1.40.

The isocyanate index of a polyurea-polymer formulation of the invention is desirably in a range of between 1.05 and 1.40, preferably in a range of between 1.20 and 1.40, and more preferably 1.20.

5

The desirable isocyanate index may vary depending on other components added to a formulation of the invention. For example, for a polyurea-polymer formulation that further includes a polyepoxide, the isocyanate index is desirably in a range of between 1.00 and 1.40, preferably in a range of between 1.05 and 1.10, and more preferably 1.05.

Blister resistance of a molded polyurea polymer can generally be improved by increasing an isocyanate index by a relatively small amount such as 0.05, preferably 0.10, and more preferably 0.15 over a conventional molded polyurea polymer. A molded polyurea polymer of the invention can be less brittle, as determined by Gardner Impact, than a conventional molded polyurea polymer having the same isocyanate index but being substantially free of jojoba oil.

A polyurea-polymer formulation can be prepared by admixing at least one of a polyisocyanate, at least one of an isocyanate-reactive material, and jojoba oil. The jojoba oil is admixed in an amount effective for providing a molded polyurea polymer prepared from the formulation with blister resistance such that when the molded polyurea polymer is exposed to moisture and a temperature of at least 350°F (177°C), the molded polyurea polymer is substantially free of blisters.

Alternatively, the jojoba oil is admixed in an amount effective to improve the blister resistance of a molded polyurea polymer prepared from a polyurea-polymer formulation as compared to the blister resistance of a molded polyurea polymer prepared from a polyurea-polymer formulation that is substantially free of jojoba oil.

In a preferred embodiment, a polyisocyanate, an isocyanate-reactive material, and jojoba oil are mixed to have an isocyanate index in a range of between 1.05 and 1.40. When the formulation further comprises a polyepoxide, the isocyanate index is in a range of between 1.00 and 1.40.

When incorporating a polyexpoxide, a polyisocyanate, a polyepoxide, an isocyanate-reactive material, and jojoba oil can be admixed while heating to a temperature of 302°F (150°C). Alternatively, the components are admixed at a temperature of less than 266°F (130°C) and then postcured at a temperature greater than 302°F (150°C). Preferably the polyepoxide and polyisocyanate are mixed together first and then the isocyanate-reactive material and the jojoba oil are admixed.

The components can be mixed in any way known to those skilled in preparing polyurea-polymer formulations. For example, the components can be mixed and poured into an open mold, a process known as casting. One use of the invention is in the production of a cellular polyurea-polymer foam prepared by mixing a polyisocyanate, jojoba oil, and a polyamine in the presence of a blowing agent and injecting the forming polymer into a mold to form a molded foam.

Preferably a polyurea-polymer formulation is prepared and molded by RIM. This process is well known in the art of preparing polyurea-polymer formulations. Generally a RIM process relates to a process in which two or more highly reactive streams are brought together under high pressure in a small mixing chamber. The material mixes and flows immediately into a warm mold where the chemical reaction is completed sufficiently to allow removal of the molded polymer from the mold. The streams are, in the case of the invention, (1) a polyisocyanate stream designated the "A" stream and (2) one or more streams containing an isocyanate-reactive material and additives designated collectively as the "B" component or stream.

RIM can be performed in a closed-mold process. In closed-mold RIM, the mold is composed such that the forming polymer, upon entering the mold, pushes the air from the mold resulting in a polymer substantially free of trapped air.

RIM can also be performed in an open mold-process. The formed polyurea-polymer part is removed from the mold The part may also be postcured by heating the molded part at an elevated temperature such as 375°F (190°C) for a period of time such as 30 minutes.

Molded polyurea-polymer formulations preferred according to the invention can display better heat stability, as evidenced by resistance to blistering, than conventional molded polyurea-polymer formulations. For example, a conventional RIM polyurea polymer, which has been exposed to moisture, can severely blister upon exposure to temperatures of 365°F (185°C). But a molded polyurea polymer preferred according to the invention, exposed to similar amounts of moisture, can endure temperatures of at least 350°F (177°C), preferably at least 375°F (190°C), and more preferably at least 390°F (199°C), and generally greater than (400 °F)(204°C) without blistering.

The molded polyurea polymers preferred according to the invention can also display superior physical properties compared to conventional molded polyurea polymers. For example, a polyurea-polymer formulation preferred according to the invention that is prepared and molded by RIM can have lower heat sag, higher modulus, less brittleness as measured by Gardner Impact, higher heat-distortion temperatures, and less blistering than conventional molded polyurea polymers.

This invention will be further described by the following Example. This Example is not meant to limit this invention but to further illustrate one embodiment of the invention.

## EXAMPLES

### Example 1 and Comparative Example 2

A polyurea-polymer formulation according to the invention was prepared by admixing a polyol blend with an equivalent weight of 280 ("B" side) and an MDI prepolymer (XUS 17054; The Dow Chemical Company; Freeport, Texas) having 19% mica filler (Himod 270 with SMAL surface treatment; Olgay Norton, North Carolina) and having an equivalent weight of 254 ("A" Side). The formulation had an isocyanate index of 1.05.

The polyol blend included an aromatic diamine (diethyltoluenediamine) (available from Albemarle; South Carolina); a polyether polyol (a 5,000 molecular-weight ethylene-oxide capped propylene polyether triol) (XUS 14003.01; available from The Dow Chemical Company; Freeport, Texas); a polyetherpolyamine (a polyamine having an approximate equivalent weight of 1,000 and having difunctionality) (TR2020; available from Huntsman Corporation; Austin, Texas), an internal-mold-release agent (zinc stearate) (available among others from Ferro Corp., Cleveland, OH, or Witco Corp., Chicago, IL); a fatty-acid ester (jojoba oil) (available among others from Desert King Corp., Chula Vista, CA, or Desert Whale Joboba Co., Inc., Tucson, AZ); a catalyst (dimethyl tin dilaurate) (UL28; available from Air Products; Allentown, Pennsylvania); and a silicone surfactant (B8418; available from Goldschmidt Chemical Corporation; Hopewell, Virginia).

A comparative formulation was prepared like the formulation of the invention except that no jojoba oil was included in the comparative formulation.

Table 1 lists the approximate composition of the polyol blends ("B" sides) used in Example 1 and Comparative Example 2. The amounts are given in weight percent based on the weight of the polyol blend.

TABLE 1:

| Polyol-Blend Formulation | | |
|---|---|---|
| COMPONENT | EXAMPLE 1 | COMPARATIVE EXAMPLE 2 |
| Diethyltoluenediamine | 34% | 32% |
| Polyetherpolyol | 47% | 50% |
| Polyetherpolyamine | 16% | 16% |
| Zinc Stearate | 1.7% | 1.7% |
| Joioba Oil | 1.5% | 0.0% |
| Dimethyl Tin Dilaurate | 0.10% | 0.10% |
| Silicone Surfactant | 0.30% | 0.30% |

A plaque (0.6 meters by 0.9 meters) was made under normal processing conditions using reaction injection molding. The plaque was postcured at 370 +/-5 degrees F (188°C) for 60 minutes and then cut into squares (10 cm by 10 cm). Each square was placed into a dry box until the experiment was conducted.

For the experiment, each square was immersed in water for 48 hours at room temperature. The squares were removed from the water, dried of excess water by blotting with a paper towel, and then immediately placed in an oven at a temperature of 375°F (190°C), 390°F (199°C), or 400°F (204°C). After 60 minutes, the squares were removed from the oven, cooled to room temperature, and examined for blistering.

Table 2 shows the results from this testing for Example 1 and Comparative Example 2. Each square was visually examined to determine whether, and to what extent, blisters were present. A scale of 0-5 was used to subjectively determine the extent of blistering, with 0 being the best in that there were no blisters present on the square after removing it from the oven.

TABLE 2

| Oven Temperature | EXAMPLE 1 Relative Blistering | COMPARATIVE EXAMPLE 2 Relative Blistering |
|---|---|---|
| 375°F (190°C). | 0 | 0 |
| 390°F (199°C). | 0 | 5 |
| 400°F (204°C) | 0 | 5 |

**Claims**

1. The use of jojoba oil as an additive in the production of a molded polyurea polymer, for improving the blister resistance thereof.

2. The use according to Claim 1, wherein said mixture is added to a mixture comprising a polyisocyanate and an isocyanate-reactive material, to prepare a mixture having an isocyanate index between 1.05 and 1.40.

3. The use of Claim 2, wherein said mixture further comprises a polyepoxide.

4. The use of Claim 2 or Claim 3, wherein said isocyanate-reactive material is at least one of a polyamine and a polyol.

5. The use of any one of Claims 2 to 4, wherein the jojoba oil is employed in an amount of at least 0.5 weight percent based on weight of said mixture excluding the polyisocyanate.

6. The use of any one of Claims 2 to 5, wherein the jojoba oil is employed in an amount of no more than 5.0 weight percent, based on weight of said mixture excluding the polyisocyanate.

7. The use of any one of the preceding Claims, wherein the said molded polyurea is exposed to moisture, said molded polyurea polymer takes up no more than 2 weight-percent water based on the weight of said molded polyurea polymer.

8. The use of any one of the preceding Claims, wherein said mixture is molded by reaction injection molding.

9. The use of any one of the preceding Claims, wherein said molded polyurea polymer is an automobile body part.

10. The use as claimed in Claim 9, wherein the said automobile body part is an automobile fascia or an automobile body panel.

**Patentansprüche**

1. Verwendung von Jojobaöl als Zusatz bei der Herstellung von einem geformten Polyharnstoffpolymeren zur Verbesserung der Widerstandsfähigkeit gegen Blasenbildung hiervon.

2. Verwendung nach Anspruch 1, bei welcher diese Mischung zu einer Mischung zugesetzt wird, welche ein Polyisocyanat und ein isocyanatreaktives Material umfaßt, um eine Mischung herzustellen, die einen Isocyanatindex zwischen 1,05 und 1,40 hat.

3. Verwendung von Anspruch 2, bei welcher diese Mischung weiter ein Polyepoxid umfaßt.

4. Verwendung nach Anspruch 2 oder Anspruch 3, bei welcher dieses isocyanatreaktive Material wenigstens eines von einem Polyamin und einem Polyol ist.

5. Verwendung nach irgendeinem der Ansprüche 2 bis 4, bei welcher das Jojobaöl in einer Menge von wenigstens 0,5 Gew.-%, bezogen auf das Gewicht dieser Mischung, ausgenommen das Polyisocyanat, verwendet wird.

6. Verwendung nach irgendeinem der Ansprüche 2 bis 5, bei welcher das Jojobaöl in einer Menge von nicht mehr als 5 Gew.-%, bezogen auf das Gewicht dieser Mischung, ausgenommen das Polyisocyanat, verwendet wird..

7. Verwendung nach irgendeinem der vorhergehenden Ansprüche, bei welcher dieser geformte Polyharnstoff Feuchtigkeit ausgesetzt wird, dieses geformte Polyharnstoffpolymere nicht mehr als 2 Gew.-% Wasser, bezogen auf das Gewicht dieses geformten Polyharnstoffpolymeren, aufnimmt.

8. Verwendung nach irgendeinem der vorhergehenden Ansprüche, bei welcher diese Mischung durch Reaktionsspritzgießen verformt wird.

9. Verwendung nach irgendeinem der vorhergehenden Ansprüche, bei welcher dieses geformte Polyharnstoffpolymere ein Kraftfahrzeugkörperteil ist.

10. Verwendung wie in Anspruch 9 beansprucht, bei welcher dieses Kraftfahrzeugkörperteil eine Kraftfahrzeugarmaturentafel oder ein Kraftfahrzeugkörperpanel ist.

## Revendications

1. Utilisation d'huile de jojoba comme additif dans la production d'un polymère polyurée moulé, pour améliorer sa résistance au cloquage.

2. Utilisation selon la revendication 1, dans laquelle ledit additif est ajouté à un mélange comprenant un polyisocyanate et un produit apte à réagir avec un isocyanate, pour préparer un mélange ayant un indice d'isocyanate compris entre 1,05 et 1,40.

3. Utilisation selon la revendication 2, dans laquelle ledit mélange comprend en outre un polyépoxyde.

4. Utilisation selon la revendication 2 ou 3, dans laquelle ledit produit apte à réagir avec un isocyanate est au moins un composé pris parmi les polyamines et les polyols.

5. Utilisation selon l'une quelconque des revendications 2 à 4, dans laquelle on emploie l'huile de jojoba en une proportion d'au moins 0,5 % en poids par rapport au poids dudit mélange à l'exclusion du polyisocyanate.

6. Utilisation selon l'une quelconque des revendications 2 à 5, dans laquelle on emploie l'huile de jojoba en une proportion ne dépassant pas 5,0 % en poids par rapport au poids dudit mélange à l'exclusion du polyisocyanate.

7. Utilisation selon l'une quelconque des revendications précédentes, dans laquelle on expose ladite polyurée moulée à l'humidité et ledit polymère polyurée moulé ne fixe pas plus de 2 % en poids d'eau par rapport au poids dudit polymère polyurée moulé.

8. Utilisation selon l'une quelconque des revendications précédentes, dans laquelle ledit mélange est moulé par moulage par injection avec réaction.

9. Utilisation selon l'une quelconque des revendications précédentes, dans laquelle ledit polymère polyurée moulé constitue une partie de carrosserie d'automobile.

10. Utilisation selon la revendication 9, dans laquelle ladite partie de carrosserie d'automobile est un tableau de bord d'automobile ou un panneau de carrosserie d'automobile.